Europäisches Patentamt

European Patent Office

Office européen des brevets

(11) Numéro de publication: **0 380 390**
**A2**

## (12) DEMANDE DE BREVET EUROPEEN

(21) Numéro de dépôt: **90400131.0**

(22) Date de dépôt: **17.01.90**

(51) Int. Cl.5: **F42C 13/00, F42C 15/40**

(30) Priorité: **27.01.89 FR 8901038**
**11.04.89 FR 8904751**

(43) Date de publication de la demande:
**01.08.90 Bulletin 90/31**

(84) Etats contractants désignés:
**DE GB IT**

(71) Demandeur: **SOCIETE D'ETUDES, DE REALISATIONS ET D'APPLICATIONS TECHNIQUES (S.E.R.A.T.)**
**7 rue Copernic**
**F-75116 Paris(FR)**

(72) Inventeur: **Carre, Paul**
**40 Allée des Champs de la Mare**
**F-91190 Gif sur Uvette(FR)**
Inventeur: **Arene, François**
**212 Ter Boulevard Péreire**
**F-75017 Paris(FR)**
Inventeur: **Kessler, Richard**
**Les Bourses, Creuzier en Neuf**
**F-03300 Cusset(FR)**

(74) Mandataire: **Armengaud Ainé, Alain**
**Cabinet ARMENGAUD AINE 3 Avenue Bugeaud**
**F-75116 Paris(FR)**

(54) **Allumeur de mine programmable autonome.**

(57) Allumeur de mine pourvu d'une capacité de programmation présentant une durée de vie, en état de veille ou d'alerte, affichée par l'utilisateur, au moment de la pose de la mine et gérée de façon autonome par l'allumeur, lequel est caractérisé en ce qu'il comporte :
- une alimentation en énergie autonome (2),
- une chaîne de mise à feu avec son dispositif de sécurité et d'armement,
- un programmateur autonome de durée de vie,
- des voies ou influences, de préférence multiples, exploitant les signaux de présence et de localisation des cibles et éventuellement de piégeages de la mine, cette exploitation qui se traduit par un changement d'état de l'allumeur pouvant prendre tour à tour au moins trois des cinq état suivants :
- état neutralisé, c'est-à-dire avec dispositif de sécurité et d'armement désarmé ;
- état de veille, avec dispositif de sécurité et d'armement armé et la ou les voies de présence en éveil ;

- état d'alerte avec dispositif de sécurité et d'armement armé et la ou les voies de localisation en recherche ;
- état de mise à feu provoquant le fonctionnement de la mine ;
- état de destruction provoquant la destruction du circuit de mise à feu sans provoquer le fonctionnement de la mine

# FIG. 2

ALIMENTATION APA ET CIRCUIT DE VEILLE

ALIMENTATION COMMANDEE PAR LE CIRCUIT DE VEILLE

ORDRES CAPTEURS ALLANT A L'APA

COMMANDE DU CHOIX DE L'ETAT FINAL

# ALLUMEUR DE MINE PROGRAMMABLE AUTONOME

La présente invention concerne un allumeur programmable autonome pour mines. On sait que les mines constituent un élément capital de la Défense. Au cours des 40 dernières années, les mines ont fait de très grands progrès dans le domaine de la résistance à la détection. C'est pourquoi des stocks de mines très importants ont été constitués dans la plupart des pays équipés d'une défense structurée.

Plus récemment, les progrès effectués dans les techniques de l'acoustique, de l'électronique et de l'optoélectronique ont permis de donner aux allumeurs de mine des capacités nouvelles de détection des cibles :
- Assurance sur l'absence ou la présence de cible au voisinage de l'allumeur,
- Précision sur la localisation de la cible en position et en vitesse.

La mise en place de mines modernes sur le champ de bataille est donc capable de mettre en échec la manoeuvre de l'adversaire. Malheureusement et inversement, la présence de ces mines constitue également une contrainte importante pour la manoeuvre des troupes amies, du moins si ces mines sont en état de veille ou d'alerte, prêtes à fonctionner en réponse aux signaux générés par les capteurs associés à leurs allumeurs.

Pour pallier cette contrainte, la présente invention se propose de créer un allumeur disposant d'une capacité de programmation caractérisée par une "durée de vie", en état de veille ou d'alerte. Cette durée est affichée par l'utilisateur, au moment de la pose de la mine, et gérée de façon autonome par l'allumeur selon l'invention. Au terme de la durée de vie, en absence de cible, l'allumeur est automatiquement neutralisé ou détruit.

L'allumeur selon l'invention est donc un "allumeur programmable autonome" qui comporte par ailleurs :
- une chaîne de mise à feu et son dispositif de sécurité d'armement ou DSA, comme dans le cas des allumeurs de mine classique,
- des "voies" ou "influences", de préférence multiples, capables d'exploiter les signaux générés par les capteurs de présence et de localisation des cibles, éventuellement de piégeage de la mine.

L'exploitation de ces signaux se traduit par un changement d'état de l'allumeur qui, selon la présente invention peut prendre tout à tour au moins 3 des 5 états suivants :
- Etat neutralisé "EN", c'est-à-dire avec DSA désarmé,
- Etat de veille "EV", avec DSA armé et la ou les voies de présence en éveil,
- Etat d'alerte "EA" avec DSA armé et la ou les voies de localisation en recherche,
- Etat de mise à feu "EF" provoquant le fonctionnement de la mine,
- Etat de destruction "ED" provoquant la destruction du circuit de mise à feu sans provoquer le fonctionnement de la mine.

Ainsi avec l'allumeur selon l'invention :
- le passage de l'état EV à l'état EA sera géré par les signaux de la voie (ou des voies) de présence de la cible,
- la mise à feu ou état "EF" sera géré par les signaux de la voie (ou des voies) de localisation de la cible,
- en fin de durée de vie à l'état EV ou EA, et selon les instructions affichées a priori par l'utilisateur, le programmateur autonome provoquera le retour à l'état EN ou la destruction voire le fonctionnement, c'est-à-dire le passage à l'état ED ou à l'état EF.

La description faite ci-après en référence aux dessins annexés va permettre de mieux comprendre le fonctionnement et la portée de l'invention.

Il est bien précisé qu'il s'agit là uniquement d'exemples non limitatifs et que l'invention peut s'appliquer également, sans sortir de son cadre, à tous autres modes de réalisation, formes, proportions, dispositions de construction, application... Sur les dessins :
- La Fig. 1 est un schéma qui précise la géométrie de la localisation de la cible, selon un exemple de disposition des capteurs,
- La Fig. 2 est un schéma par blocs qui précise l'organisation générale de l'allumeur et de sa connexion avec ses éléments périphériques et,
- La Fig. 3 est également un schéma par blocs qui précise la structure de l'allumeur proprement dit (APA).

Ainsi l'allumeur de mine, selon cet exemple de l'invention, comporte notamment : une alimentation en énergie autonome, un circuit de mise à feu avec son dispositif de sécurité et d'armement (DSA), un programmateur autonome de la durée de vie, une voie ou influence détectant la présence de la cible, réalisée de préférence sous la forme d'un capteur acoustique ou des possibilités de connexions avec de telles voies; une ou plusieurs voies ou influences de localisation de la cible, ou des possibilités de connexions avec de telles voies et éventuellemnt, une voie de piège antirelevage.

Dans cet exemple de réalisation non limitatif de l'invention, l'alimentation est du type électrique, préférentiellement par pile (s) au lithium. La mise à feu est donc effectuée par amorce (s) électrique (s). Le D.S.A. assure au transport une interruption mécanique de la chaîne pyrotechnique. Ce D.S.A. est complété par :

- un relais électronique commandant l'ouverture ou la fermeture du circuit électrique lors du passage de l'état neutralisé (EN) ou de l'état de veille (EV) à l'état d'alerte (EA),
- une charge pyrotechnique à faible énergie et son ou ses amorce(s) électrique(s) pour assurer, en fin de durée de vie, le passage à l'état de destruction (ED).

Selon cet exemple de l'invention, le programmateur est constitué par un circuit électronique intégré, piloté par un oscillateur à quartz et préférentiellement constitué de modules prédiffusés et hybrides.

Une commande manuelle d'affichage de la durée de vie est associée au programmateur.

On peut éventuellement lui associer encore une deuxième commande manuelle déterminant l'état de l'allumeur en fin de durée de vie, destruction (ED) ou fonctionnement (EF).

Selon cet exemple de l'invention, la voie acoustique gère la veille de l'allumeur, état EV à faible consommation d'énergie, sans circuit de puissance. Cette voie provoque le passage de l'état EV à l'état EA sur réception d'un signal du capteur acoustique de niveau suffisamment significatif par rapport à l'environnement et à la signature de la cible attendue.

Toujours selon cet exemple et dans le cas de la localisation monovoie, celle-ci est préférentiellement assurée par destruction d'un fil de rupture, rupture d'un conducteur électrique ou d'une fibre optique ou encore d'un fil de traction.

Dans le cas de la localisation par voies multiples, celle-ci peut-être assurée par 2 séries de 4 voies, l'une pour les cibles venant de la gauche, l'autre pour les cibles venant de la droite.

Selon cet exemple de l'invention, chaque voie est constituée par un axe optique sur lequel est placé un capteur infrarouge passif travaillant de préférence dans la bande des 8 à 12

Pour chaque série, les capteurs détectent le passage de l'avant de la cible sur leur axe optique. Un circuit d'exploitation mesure les délais t1, t2,... assurant les passage sur les différents axes. La connaissance de ces délais permet de déterminer :
- la position de la cible en orientation et distance D,
- la vitesse de la cible de module V et direction α

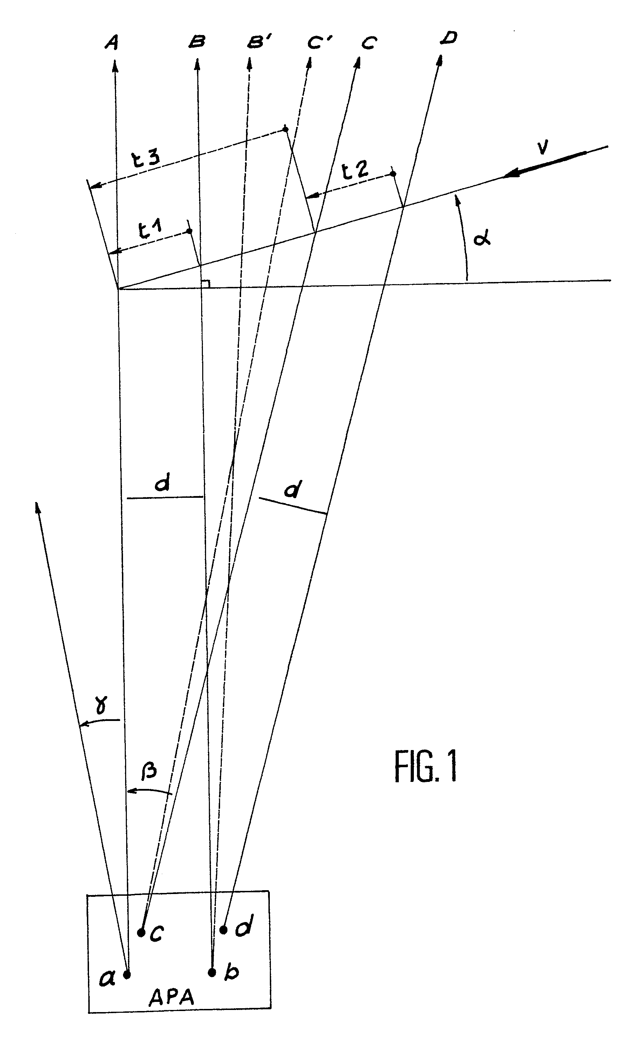

Ainsi, dans le cas de la solution illustrée par la Fig. 1, les axes de chaque série sont constitués de 2 paires parallèles : A et B, C et D sur lesquels sont respectivement situés les capteurs a et b, c et d.

Chaque paire présente l'écartement d, inférieur à la largeur de l'allumeur, programmable autonome selon l'invention (APA). L'orientation de chaque paire par rapport à l'autre diverge de l'angle $\beta$, avec $\beta$ préférentiellement de l'ordre de 2° à 3°, étant bien précisé que l'exemple donné par la Fig. 1 n'est pas limitatif.

Si les temps détectés sont décalés de t1 entre A et B, t2 entre C et D, t3 entre C et A, on démontre que, dans l'hypothèse d'une vitesse constante, la distance de la cible a pour valeur :

$$D' = \frac{d}{\sin \beta} \cdot \frac{t3}{t2}$$

alors que celle-ci est animée de la vitesse transversale :

$V\cos\alpha = \frac{d}{t1}$

La connaissance de D et Vcosα permet alors de déterminer le retard to avec lequel l'allumeur, selon cet exemple de l'invention, devra initier une mine à effet dirigé :
- dans une direction faisant l'angle $\gamma$ avec l'axe optique, avec $\gamma$ de l'ordre de 3 degrés par exemple,
- en vue d'un impact situé à $\ell$ en arrière de la partie avant de la cible.

En effet, connaissant la loi d'éloignement $\tau = f(x)$ communiquée à cette mine par son lanceur, on vérifie que to est déterminé par la relation

$$to = \frac{\gamma D + \ell}{V_0\cos\alpha} - f(D)$$

Selon cet exemple de l'invention, les réponses t1, t2, t3, de la série des 4 voies, concernées par la cible, sont exploitées automatiquement par un algorithme faisant correspondre à chaque triplet t1, t2, t3, les valeurs correspondantes de D et Vo cosα ou, directement et préférentiellement, les valeurs de to associées à ce triplet.

A cet effet et toujours selon cet exemple, la banque de données assurant cette correspondance est établie à partir des valeurs théoriques.

Etant donné les imperfections de réalisation, notamment les écarts de simbleautage entre les axes optiques, la bande de données de chaque exemplaire est étalonnée autant que nécessaire, sur quelques points, par voie expérimentale et les corrections correspondantes lui sont apportées par interpolation.

Selon une autre variante de cet exemple de l'invention, les axes de chaque paire de voies ne sont plus parallèles entre elles mais divergentes : par exemple, par un décalage angulaire, de l'ordre de 1 degré, des voies B et C de la figure 1, sur laquelle les voies décalées sont repérées B' et C'.

Selon une solution simplifiée de cet exemple de l'invention, on ne dispose que d'une seule voie IR et on ajuste, de préférence sur le terrain, un retard to correspondant à une estimation de D et Vocosα fonction de la situation opérationnelle lors de la mise en place, sur le terrain, de l'allumeur et de la mine qui lui est associée.

Bien entendu l'allumeur, selon l'exemple de l'invention, peut comporter également :
- un capteur à écrasement ou une possibilité de connexion avec un capteur à écrasement,
- un capteur ou des capteurs antirelevage ou une possibilité de connexion avec un capteur antirelevage.

Par ailleurs, l'allumeur selon cet exemple de l'invention comporte des interfaces analogues avec ceux des bouchons allumeurs en service. Ainsi, l'utilisateur est assuré de pouvoir monter par lui-même l'allumeur selon l'invention sur la plupart, voire la totalité, des mines en service.

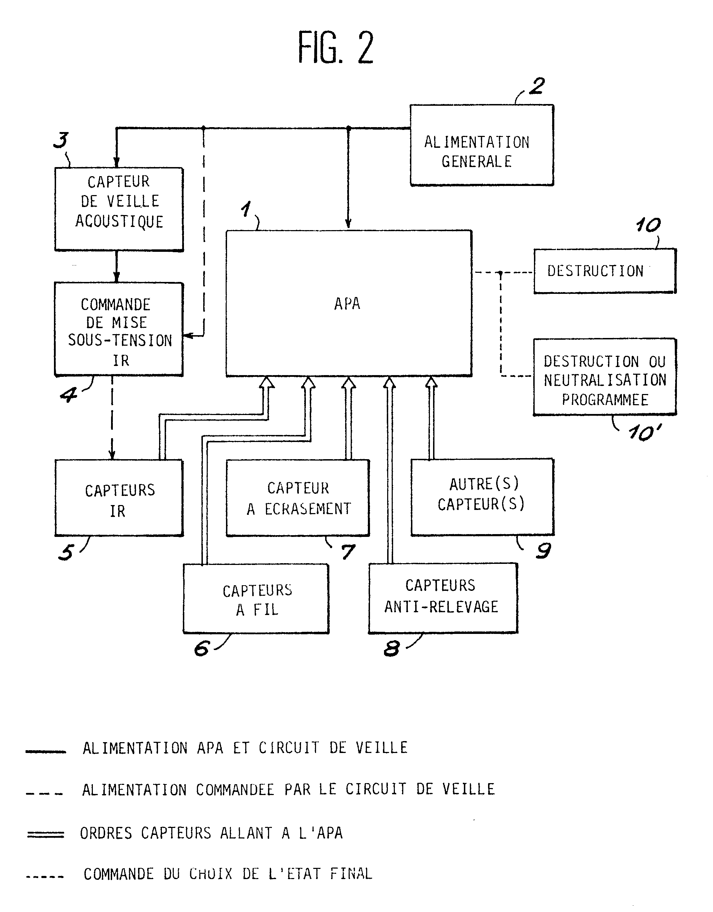

Un exemple de réalisation non limitatif de l'organisation générale de l'allumeur selon l'invention, a été représenté schématiquement sur la Fig. 2 sur laquelle sont repérées les liaisons entre :
- l'allumeur programmable autonome proprement dit "APA" 1,
- son alimentation générale 2, par exemple par pile(s) au lithium,
- ses équipements périphériques comportant notamment:
. un capteur de veille acoustique 3,
. une commande 4 de mise sous tension infrarouge,
. des capteurs infrarouges 5 et des capteurs à fil 6,
. des capteurs à écrasement 7 et antirelevage 8,
. d'autres capteurs éventuels 9,
. une commande de destruction 10 ou encore de destruction ou neutralisation 10′.

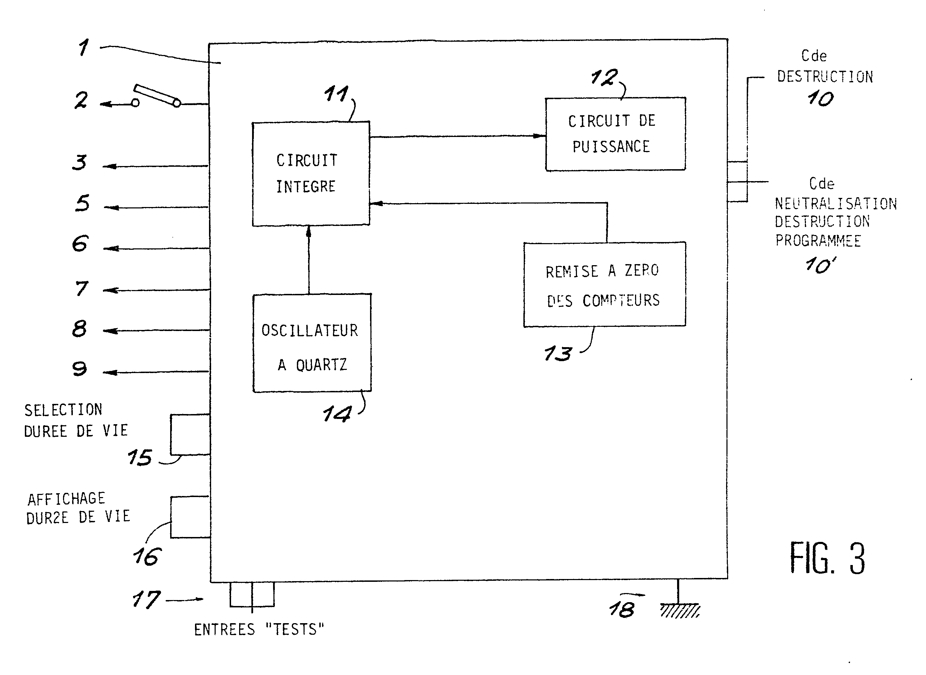

L'organisation de l'allumeur proprement dit "APA" 1, selon cet exemple de l'invention, est encore précisée par la Fig. 3 sur laquelle sont repérés :
- le circuit intégré 11 constituant le programmateur de l'allumeur APA,
- le circuit de puissance 12,
- la remise à zéro du compteur 13,
- l'oscillateur à quartz 14,
- la sélection de la durée de vie 15,
- l'affichage de cette durée de vie 16,
- une prise test 17,
- une prise de terre 18,
- les commandes et départ de connexions déjà repérés sur la figure 2.

Selon l'invention, la mine et son allumeur programmable autonome sont reliés par une connection insensible aux effets des champs électrostatiques et électromagnétiques, par exemple à l'aide de fibres optiques ou par une liaison pyrotechnique telle notammet un cordeau détonant ou un cordeau "nonel". Grâce à ce mode de réalisation, on peut assurer le fonctionnement à distance de la mine sans qu'il soit nécessaire d'intégrer à cette dernière, ni explosif primaire, ni interruption de chaîne pyrotechnique.

## Revendications

1. Allumeur de mine pourvu d'une capacité de programmation présentant une durée de vie, en état de veille ou d'alerte, affichée par l'utilisateur, au moment de la pose de la mine et gérée de façon autonome par l'allumeur, lequel est caractérisé en ce qu'il comporte :
- une alimentation en énergie autonome (2),
- une chaîne de mise à feu avec son dispositif de sécurité et d'armement,
- un programmateur autonome de durée de vie,
- des voies ou influences, de préférence multiples, exploitant les signaux de présence et de localisation des cibles et éventuellement depiégeages de la mine, cette exploitation qui se traduit par un changement d'état de l'allumeur pouvant prendre tour à tour au moins trois des cinq état suivants :
- état neutralisé, c'est-à-dire avec dispositif de sécurité et d'armement désarmé ;
- état de veille, avec dispositif de sécurité et d'armement armé et la ou les voies de présence en éveil ;
- état d'alerte avec dispositif de sécurité et d'armement armé et la ou les voies de localisation en recherche ;
- état de mise à feu provoquant le fonctionnement de la mine ;
- état de destruction provoquant la destruction du circuit de mise à feu sans provoquer le fonctionnement de la mine

2. Allumeur selon la revendication 1, caractérisé en ce que le passage de l'état de veille à l'état d'alerte est géré par les signaux de la ou des voies de présence de la cible, la mise à feu ou l'état de mise à feu est géré par les signaux de la ou des voies de localisation de la cible et, en fin de durée de vie, à l'état de veille ou d'alerte et selon les instructions affichées, initialement par l'utilisateur, le programmateur autonome de l'allumeur provoque le retour à l'état neutralisé, ou la destruction ou le fonctionnement c'est-à-dire le passage à l'état de destruction ou à l'état de fonctionnement.

3. Allumeur selon l'une des revendications 1 ou 2, caractérisé en ce que la programmation et son exploitation sont réalisées par un circuit électronique intégré (11), piloté par un oscillateur à quartz (14), constitué de préférence par des modules prédiffusés et hybrides.

4. Allumeur selon l'une quelconque des revendications précédentes, caractérisé en ce que l'une de ses influences comporte un capteur acoustique (3)dont il exploite automatiquement les signaux pour passer de l'état de veille à l'état d'alerte et

réciprocement.

5. Allumeur selon l'une quelconque des revendications 1 à 4, caractérisé en ce que l'une de ses influences est un fil de rupture (6) assurant le fonctionnement de la mine avec un retard ajusté a priori soit en usine, soit par l'utilisateur en fonction des paramètres de la situation.

6. Allumeur selon l'une quelconque des revendications précédentes caractérisé en ce qu'au moins l'une de ses influences est une voie infrarouge (5).

7. Allumeur selon la revendication 6, caractérisé par la présence d'une seule voie infrarouge permettant le fonctionnement automatique de la mine par passage à l'état de mise à feu avec un retard ajusté a priori, soit en usine, soit par l'utilisateur en fonction des paramètres de la situation.

8. Allumeur selon la revendication 6, caractérisé par la présence de plusieurs voies infrarouges, préférentiellement deux séries de quatre de manière à permettre la mesure automatique des paramètres de la cible, notamment distance, vitesse transversale, et la détermination du retard correspondant à apporter au fonctionnement des mines à effets dirigés susceptibles d'être associées à cet allumeur.

9. Allumeur selon l'une quelconque des revendications 6 à 8, caractérisé en ce que les réponses données pour chaque série de 4 voies infrarouges, en fonction des différentes valeurs que peuvent prendre les paramètres de la cible, constituent une banque de données établie à partir des valeurs théoriques de ces réponses, et éventuellement d'un étalonnage expérimental permettant d'apporter à chaque exemplaire de cet allumeur, des corrections que pourraient nécessiter les imperfections de réalisation de ce matériel.

10. Allumeur selon l'une quelconque des revendications 6,8,9, caractérisé en ce que l'exploitation automatique de ses quatre voies infrarouges est fondée sur un algorithme assurant la recherche dans la banque de données des paramètres de la cible correspondant aux réponses de ces quatre voies.

11. Allumeur selon l'une quelconque des revendications précédentes caractérisé en ce que sa programmation autonome est pilotée par un horloge à quartz.

12. Allumeur selon l'une quelconque des revendications 6 à 11, caractérisé en ce que chaque voie infrarouge est constituée par un axe optique sur lequel est placé un capteur infrarouge passif préférentiellement dans la bande des 8 à 12 u.

13. Allumeur selon l'une quelconque des revendications 6 à 12, caractérisé en ce que chaque série de quatre voies est constituée de deux paires d'axes écartées d'une distance inférieure à la largeur hors tout de l'allumeur, les deux paires faisant entre elles un angle de préférence de l'ordre de 2 à 3°, les axes de chaque paire présentant entre eux une orientation en parallèle ou une légère divergence, de l'ordre de 1 degré par exemple.

14. Allumeur selon l'une quelconque des revendications précédentes, caractérisé en ce que sa destruction, passage à l'état de destruction, est assurée par une charge pyrotechnique à faible puissance initiée par un allumeur électrique.

15. Allumeur selon l'une quelconque des revendications précédentes, caractérisé en ce que l'une des influences est reliée à un capteur à écrasement (7).

16. Allumeur selon l'une quelconque des revendications précédentes, caractérisé en ce que l'une des influences est reliée à un capteur antirelevage (8).

17. Allumeur selon l'une quelconque des revendications précédentes, caractérisé en ce qu'il comporte des interfaces analogues à ceux des bouchons allumeurs en service.

18. Allumeur selon l'une quelconque des revendications précédentes, caractérisé en ce que la mine et l'allumeur sont reliés à l'aide d'une connection insensible aux effets des champs électrostatiques et électromagnétiques.

19. Allumeur selon la revendication 18, caractérisé en ce que la connection entre la mine et l'allumeur est réalisée par fibres optiques.

20. Allumeur selon la revendication 18, caractérisé en ce que la connection entre la mine et l'allumeur est réalisée par une liaison pyrotechnique telle que cordeau détonant.

FIG. 1

# FIG. 2

| | |
| --- | --- |
| 2 | ALIMENTATION GENERALE |
| 3 | CAPTEUR DE VEILLE ACOUSTIQUE |
| 4 | COMMANDE DE MISE SOUS-TENSION IR |
| 1 | APA |
| 10 | DESTRUCTION |
| 10' | DESTRUCTION OU NEUTRALISATION PROGRAMMEE |
| 5 | CAPTEURS IR |
| 7 | CAPTEUR A ECRASEMENT |
| 9 | AUTRE(S) CAPTEUR(S) |
| 6 | CAPTEURS A FIL |
| 8 | CAPTEURS ANTI-RELEVAGE |

——— ALIMENTATION APA ET CIRCUIT DE VEILLE

- - - ALIMENTATION COMMANDEE PAR LE CIRCUIT DE VEILLE

=== ORDRES CAPTEURS ALLANT A L'APA

----- COMMANDE DU CHOIX DE L'ETAT FINAL

FIG. 3

EP 0 380 390 A2